# EUROPÄISCHE PATENTSCHRIFT

(11) **EP 0 350 765 B1**
(45) Veröffentlichungstag und Bekanntmachung des Hinweises auf die Patenterteilung: **09.06.1993**
(21) Anmeldenummer: 89112157.6
(22) Anmeldetag: 04.07.1989
(51) Int. Cl.: H04N 7/01

(54) **Transcoder**
Transcoder
Transcodeur

(30) Priorität: 12.07.1988 DE 3823592; 16.09.1988 DE 3831524
(43) Veröffentlichungstag der Anmeldung: 17.01.1990
(73) Patentinhaber: Deutsche Thomson-Brandt GmbH, 78010 Villingen-Schwenningen (DE)
(72) Erfinder: Hartnack, Wolfgang, Dipl.-Ing., D-3005 Hemmingen 1 (DE); Plantholt, Martin, Dr. Dipl.-Ing., D-3005 Hemmingen 1 (DE)

(56) Entgegenhaltungen:
- EP-A- 0 177 987
- US-A- 4 701 793
- ELEKTRONIK, 25/14.12, 1984, MUnchen SöNKE MEHRGARDT "Bildspeicher fUr flimmerfreies Fernsehen" Seiten 53-57
- RUNDFUNKTECHNISCHE MITTEILUNGEN 6/1981, Hamburg UWE E. KRAUS "Vermeidung des Grossflächenflimmerns in Fernseh-Heimempfängern" Seiten 264-269

## Beschreibung

Die Erfindung betrifft einen Transcoder zur Bildwiederholfrequenz-Verdoppelung eines Zeilensprung-Videosignals.

Zur Bildwiedergabe-Verbesserung in Fernsehsystemen ist vorgeschlagen worden, die Zeilenzahl von 625 Zeilen pro Bild auf 1250 Zeilen zu erhöhen. Wegen der hohen zu verarbeitenden Ablenkleistung der Geräte und der bandbegrenzten Kanäle wird aber die heute übliche Bildwiederholfrequenz von 50Hz sowie das Zeilensprung-Verfahren beibehalten. Trotz der erhöhten Zeilenzahl kommt es auch bei diesem Wiedergabeverfahren zu einem Großflächenflimmern und Zwischenzeilenflimmern. In Elektronik 25, 14.12.84, "Bildspeicher für flimmerfreies Fernsehen", wird zur Verringerung des Großflächenflimmerns bewegungsabhängig und bildpunktweise zwischen den Betriebsarten ABAB bei statischem Bildinhalt und AABB bei dynamischem Bildinhalt für eine Bildwiederholfrequenz-Verdoppelung umgeschaltet. Im Mode AABB treten aber mit zunehmender Bewegungsgeschwindigkeit Bewegungs-Sprünge auf.

Aufgabe der Erfindung es ist, einen Transcoder zur Bildfrequenz-Verdoppelung anzugeben, der eine verbesserte Bildqualität liefert.

Die Erfindung wird durch die im Patentanspruch 1 angegebenen Maßnahmen gelöst. Vorteilhafte Weiterbildungen der Erfindung sind in den Unteransprüchen beschrieben.

Zur bewegungsadaptiven Transcodierung eines farbigen Videobildes einer ersten Norm mit z.B. 1250 Zeilen, 50Hz Bildwiederholfrequenz und Zeilensprung in ein Videobild einer zweiten Norm mit 100Hz Bildwiederholfrequenz und Zeilensprung wird das zu z.B. 1250 Zeilen transcodierende Bild der ersten Norm in einem ersten Verarbeitungsschritt in ein Bildsignal einer dritten Norm von z.B. 1250 Zeilen, 50Hz ohne Zeilensprung mit Bewegungsadaption umgewandelt. Aus diesem Bildsignal der dritten Norm wird in einem zweiten Verarbeitungsschritt durch Filterung ein erstes Halbbild des Bildsignals der zweiten Norm gewonnen, welches zusammen mit einem zweiten Halbbild, welches aus dem im ersten Verarbeitungsschritt gewonnenem Videobild der dritten Norm durch entsprechende Adressierung beim Auslesen eines Bildspeichers gewonnen wird, das vollständige Videobild der zweiten Norm ergibt. Zur Durchführung der Transcodierung sind Vollbild- und Halbbildspeicher erforderlich. In einem ersten Bildspeicher wird das ankommende im Zeilensprungverfahren aufgezeichnete Videosignal der ersten Norm eingeschrieben, während zeitlich synchron aus den beiden anderen Bildspeichern ausgelesen wird. Zur Verarbeitung der Bildpunkte des 1250 Zeilen/50 Hz/2:1 Bildes der ersten Norm werden diese in Zeilenspeicher eingelesen. Anschließend wird überprüft, ob der jeweilige Bildpunkt dynamische oder statische Information enthält. Bei statischen Bildinhalten der Eingangshalbbilder werden in den zugeordneten Ausgangshalbbildern die Originalbildpunkte der entsprechenden räumlichen Lage eingesetzt. Es sind dabei dem ersten Eingangshalbbild das erste und dritte Ausgangshalbbild, dem zweiten Eingangshalbbild das zweite und vierte Ausgangshalbbild zugeordnet.

Bei dynamischen Bildinhalten werden durch die Transcodierung aus den beiden Eingangshalbbildern die vier Ausgangshalbbilder wie folgt erzeugt:
a) das erste Ausgangshalbbild übernimmt die Bildpunkte des ersten Eingangshalbbildes,
b) für die in dem zweiten Ausgangshalbbild wiederzugebenden Bildpunkte werden Bildpunkte ermittelt, die als Zwischen-Interpolationswert dienen und die gleiche zeitliche Lage aufweisen wie die des ersten Eingangshalbbildes und aus vertikal benachbarten Bildpunkten des ersten Eingangshalbbildes ermittelt werden. Diese so ermittelten Bildpunkte werden mit den zeitlich versetzten Bildpunkten des zweiten Eingangshalbbildes in der gleichen Zeile interpoliert. Das Interpolationsergebnis stellt den entsprechenden Bildpunkt des zweiten Ausgangshalbbildes dar.
c) die in dem dritten Ausgangshalbbild wiederzugebenden Bildpunkte werden aus vertikal benachbarten Bildpunkten des zweiten Eingangshalbbildes ermittelt,
d) für die in dem vierten Ausgangshalbbild wiederzugebenden Bildpunkte werden Bildpunkte ermittelt, die als Zwischen-Interpolationswert dienen und die gleiche zeitliche Lage aufweisen wie die des nachfolgenden ersten Eingangshalbbildes und aus vertikal benachbarten Bildpunkten des nachfolgenden ersten Eingangshalbbildes ermittelt werden. Diese so ermittelten Bildpunkte werden mit den zeitlich versetzten Bildpunkten des zweiten Eingangshalbbildes in der gleichen Zeile interpoliert.

Für die Interpolation der Luminanz-Bildpunkte Y des zweiten und vierten Ausgangshalbbildes kann ein zwei-aus-sechs-Medianfilter gemäß DE-B-3803605 verwendet werden. Für die Interpolation der entsprechenden Chrominanz-Bildpunkte U,V kann der arithmetische Mittelwert aus den zweitlich benachbarten Bildpunkten gleicher räumlicher Lage gebildet werden.

Bei dynamischen Informationsinhalten werden zur Durchführung der verschiedenen vertikalen Filterungen gleiche Filterkoeffizientensätze und zugehörige Bildpunkte zur Filterung ausgewählt.

Nachstehend wird ein Ausführungsbeispiel anhand der Zeichnung erläutert. Es zeigen:
- Fig. 1: Transcoder für Y-Signal
- Fig. 2: Transcoder für uv-Signal
- Fig. 3: Vertikalfilter
- Fig. 4: ein Zeitdiagramm

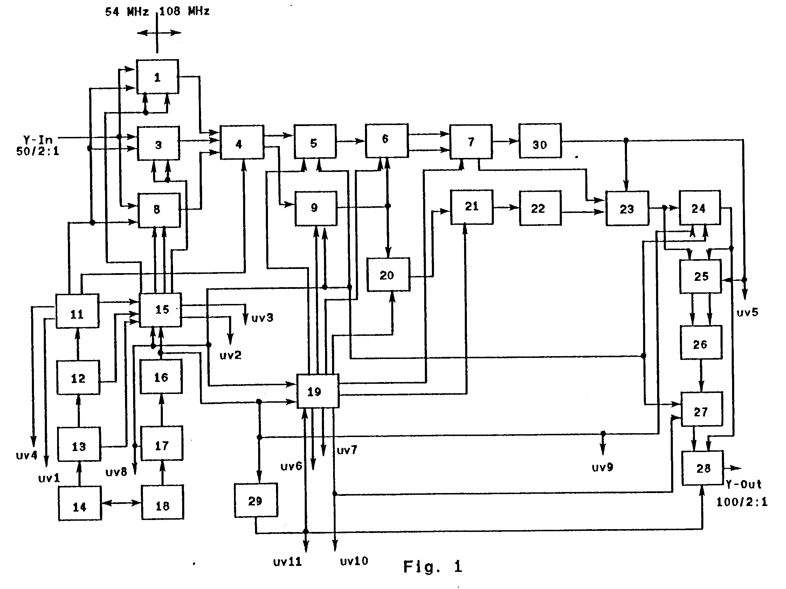

Fig. 1 zeigt einen erfindungsgemäßen Transcoder für ein Luminanzsignal Y. Über die Eingangsklemme Y-In wird mittels acht paralleler Leitungen das zu verarbeitende Bildsignal Y auf die parallel geschalteten Eingänge von drei Vollbildspeichern 1,3 und 8 gegeben. Ein Taktgenerator 14 mit z.B. einer Taktfrequenz von 54 MHz stellt über einen Spaltenadressenzähler 13 und einen Zeilenadressenzähler 12 einen Halbbildadressenzähler 11 ein, dessen Adressenergebnis den Speichervorgang der Vollbildspeicher 1,3,8 steuert. Der Halbbildadressenzähler 11 steuert einen Umschalter 4. Dieser Umschalter 4 schaltet die Ausgänge der Vollbildspeicher 1,3 und 8 auf Zeilenspeicher 5 und 9.

Die Vollbildspeicher 1,3 und 8 haben acht Ausgangsleitungen, welche über den Umschalter 4 auf die Zeilenspeicher 5 und 9 geschaltet werden können. Weitere Ausgänge des Halbbildadressenzählers 11 und der Zeilen- und Spaltenadressenzähler 12,13 führen auf einen Adressenbusschalter 15. Mit Hilfe dieses Adressenbusschalters 15 wird der Schreib- und Lesevorgang der Vollbildspeicher 1,3 und 8 gesteuert. Ein weiterer Taktgenerator 18, mit z.B. der doppelten Taktfrequenz des Taktgenerators 14 sowie einer phasenmäßigen Verkoppelung, steuert Spalten- und Adressenzähler 17,16. Ausgänge des Spaltenadressenzählers 17 und des Zeilenzählers 16 führen ebenfalls auf den Adressenbusumschalter 15. Weitere Ausgänge des Zeilenzählers 16 führen auf einen Zeilen- und Koeffizienten-Adressengenerator 19, sowie auf einen Halbbildadressenzähler 29, einen Bildspeicher 24 und einen Halbbildspeicher 27. Weitere Ausgänge des Spaltenzählers 17 führen auf den Zeilen- und Koeffizienten-Adressengenerator 19 und die Zeilenspeicher 5 und 9. Dieser Zeilen- und Koeffizienten-Adressengenerator 19 ist einerseits mit den Zeilenspeichern 5 und 9 über zwei * vier Leitungen verbunden, andererseits mit Zeilenschaltern 6 über zehn * vier und mit Zeilenschalter 20 über sechs * vier Adressenleitungen.

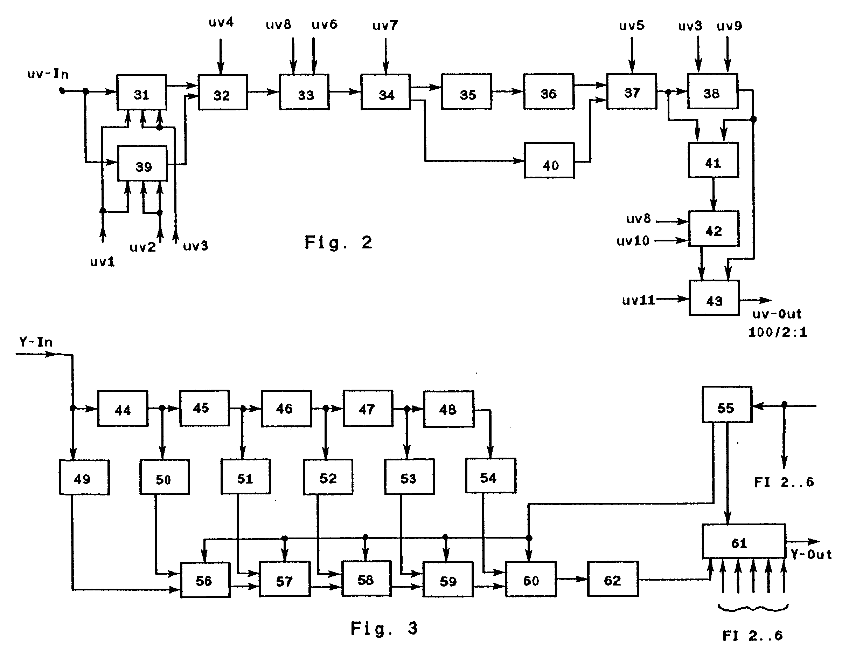

Der Zeilenschalter 6 weist weitere neun * acht Eingänge vom Zeilenspeicher 5 sowie zwölf * acht Eingänge vom Zeilenspeicher 9 auf. Weiterhin führen zwölf * acht Leitungen des Zeilenspeichers 9 auf den Zeilenschalter 20. Der Zeilenschalter 6 führt zehn * acht Leitungen auf Eingänge eines Bewegungsdetektors 7. Der Zeilenschalter 20 ist über sechs * acht Leitungen mit einem für dynamische Informationsinhalte zuständigen vertikalen Filter 21 verbunden. Weitere Ausgänge des Zeilen- und Koeffizienten-Adressengenerators 19 führen über je drei Leitungen auf den Bewegungsdetektor 7 und auf das für dynamische Informationsinhalte zuständige vertikale Filter 21. Ein Ausgang des Bewegungsdetektors 7 ist über eine Leitung mit einer Schaltung zur Mittelung von Bewegungsdetektorsignalen 30 verbunden, wie sie in DE-B-3809249, Fig. 2 beschrieben ist. Weitere Leitungen des Bewegungsdetektors 7 sind mit einem statisch/Bewegungsumschalter 23 verbunden. Acht Leitungen des für dynamische Informationsinhalte zuständigen vertikalen Filters 21 führen auf Eingänge einer Verzögerungsschaltung 22, die das Signal des vertikalen Filters 21 an das Umschaltsignal der Schaltung zur Mittelung von Bewegungsdetektorsignalen 30 synchronisiert. Das Signal des vertikalen Filters 21 und das im statischen Fall vorhandene, somit direkt aus dem Bewegungsdetektor abgeleitete Signal werden auf den statisch/Bewegungsumschalter 23 geführt. Ausgänge der Schaltung zur Mittelung von Bewegungsdetektorsignalen 30 führen auf den statisch/Bewegungsumschalter 23 und einen Sortierer 25. Die Schaltungsteile Bewegungsdetektor 7 und das für die Bewegung zuständige vertikale Filter 21 sind je fünfmal bzw. sechsmal vorhanden.

Ausgangsleitungen des statisch/Bewegungsumschalter 23 führen einerseits auf den Bildspeicher 24 als auch den Sortierer 25. Die 8-Bit Ausgangsleitungen des Bildspeichers 24 sind mit dem Sortierer 25 und einem Schalter 28 verbunden, welcher von den Halbbildadressenzähler 29 gesteuert wird. Der Sortierer 25 ist über 2x8-Bit Leitungen mit einem Mittelwertbildner 26 und dieser über 8-Bit Leitungen mit einem Halbbildspeicher 27 verbunden. Der Halbbildspeicher 27 speichert die geradzahligen Zeilen der bearbeiteten Signale. Die 8-Bit Ausgangsleitungen des Halbbildspeichers 27 sind mit dem Umschalter 28 verbunden. Der Bildspeicher 24 ist mit dem Spaltenzähler 17, der Halbbildspeicher 27 mit dem Spaltenzähler 17 und dem Zeilen- und Koeffizienten-Adressengenerator 19 verbunden.

Funktionsbeschreibung von Fig. 1. Die ankommenden Daten des 1250 Zeilen, 50 Hz, 2:1 Bildes n werden, gesteuert durch den Halbbildadressengenerator 11, z.B. in den Vollbildspeicher 1 gespeichert, welcher die Bilddaten eines Bildes n-3 enthält. Diese Daten des Bildes n-3 sind für die weitere Berechnung nicht mehr erforderlich. Gleichzeitig schaltet der Halbbildadressengenerator 11 den Umschalter 4 beispielsweise auf den Vollbildspeicher 3, welcher die Daten des Bildes n-1 enthält. Zur Reduktion der zu speichernden Daten werden nur die 1152 aktiven Zeilen des 1250 Zeilen Bildes in den Vollbildspeicher 1,3,8 gespeichert. Über den Umschalter 4 werden die Daten des Bildes n-1 in den zwölf Zeilenspeicher 9 und die Daten des Bildes n-2 in den zehn Zeilenspeicher 5 eingeschrieben. Der Zeilenumschalter 6 leitet die Daten der Zeilenspeicher 5 und 9 weiter zur Berechnung an den Bewegungsdetektor 7, wie er z. B. in DE-B-3809249 beschrieben ist. Das Ergebnis des Bewegungsdetektors 7 wird der Schaltung zur Mittelung von Bewegungsdetektorsignalen 30 zur Auswertung zugeführt, die entsprechend DE-B-3809249 ein Umschaltsignal für jeden Bildpunkt an den Umschalter 23 liefert. Der Zeilenschalter 20 schaltet die Daten des Zeilenspeichers 9 auf das für dynamische Informationsinhalte zuständige vertikale Filter 21 mit fest vorgegebenen Filterkoeffizienten. Der Bewegungsdetektor 7 ist fünfmal und das für dynamische Informationsinhalte zuständige vertikale Filter 21 sechsmal vorhanden, weil je Takt ein Wert aus den vorhandenen fünf bzw. sechs Werten berechnet wird. Am Ausgang dieser Schaltungsteile liegt somit mit jedem Takt ein berechneter Wert an. In Abhängigkeit der Detektion des Bewegungsdetektors 7 schaltet der Umschalter 23 den mit statischer Bildinformation beaufschlagten Ausgang des Bewegungsdetektors 7 oder das Ausgangssignal des für dynamische Informationsinhalte zuständigen vertikalen Filters 21 auf seinen Ausgang. Die am Ausgang des Umschalters 23 anliegenden Bildinformationen entsprechen einem Bild mit einem Format von 1250 Zeilen, 50 Hz Bildwiederholfrequenz ohne Zeilensprung.

Zur nachfolgenden Medianfilterung zur Gewinnung einer 1250 Zeilen, 100 Hz, 2:1 Bildinformation wird das Signal in dem Bildspeicher 24 gespeichert. Dieser Bildspeicher dient zur Verzögerung der Bildinformation um ein Vollbild, da für die Bildwiederholfrequenzerhöhung zwei Stützbilder erforderlich sind, aus denen die Daten eines Bildes n* ermittelt werden. Es werden z. B. drei Bildpunkte einer Zeile der Bilder n-1, n-2 der Größe nach sortiert. Zwei Bildpunkte mittlerer Wertigkeit werden dann gemittelt und als Bildpunkt des Bildes n* in den Halbbildspeicher 27 gespeichert. Über den Umschalter 28 werden die Bilddaten des Vollbildspeichers 24 und des Halbbildspeichers 27 nacheinander ausgelesen, wobei aus dem Vollbildspeicher nur die ungradzahligen oder gradzahligen Zeilen ausgelesen werden.

Der Adressenbusschalter 15 übernimmt die zentrale Steueraufgabe. Für den Schreibvorgang eines Vollbildspeichers 1,3,8 schaltet er z. B. den Zeilenadressenzähler 12 sowie den Spaltenadressenzähler 13 auf den einzuschreibenden Vollbildspeicher 1. Für den Auslesevorgang schaltet er den Zeilenzähler 16 und den Spaltenzähler 17 dann auf die Vollbildspeicher 3,8. Dieser Vorgang wiederholt sich zyklisch, je nachdem welcher Vollbildspeicher 1,3,8 gerade beschrieben bzw. ausgelesen wird. Eine weitere Verbindung besteht von dem Zeilenzähler 16 zum Koeffizienten- und Zeilenadressengenerator 19. Dieser Koeffizienten- und Zeilenadressengenerator 19 berechnet aus dem Zeilenzähler 16 die jeweils für die Berechnung anstehenden aktuellen Zeilen der Zeilenspeicher 5,9 und die jeweils anstehenden Adressen für die Koeffizientensätze.

Fig. 2 zeigt einen erfindungsgemäßen Transcoder für ein Chrominanzsignal U,V. Wie den Fig. 1, 2 zu entnehmen ist, werden von dem Transcoder für das Luminanzsignal Y Steuersignale uv1 .. uv11 zur parallelen Signalverarbeitung dem Transcoder für das Chrominanzsiignal U,V zugeführt. Es sind somit Schaltungsteile für die Takterzeugung, zur Detektion der Bewegung sowie zur Steuerung der Speicher nicht erforderlich.

Über die Eingangsklemme UV-In wird mittels acht paralleler Leitungen das zu verarbeitende Bildsignal U, V auf die parallel geschalteten Eingänge von zwei Vollbildspeichern 31, 39 gegeben. Steuer- und Taktsignale uv1, uv2 und uv3 werden vom Halbbildadressenzähler 11 und Adressenbusschalter 15 den Vollbildspeichern 31, 39 zugeführt. Ein vom Halbbildadressenzähler 11 geliefertes Steuersignal uv4 steuert einen Umschalter 32. Dieser Umschalter 32 schaltet die Ausgänge der Vollbildspeicher 31,39 auf einen Zeilenspeicher 33. Die Vollbildspeicher 31,39 haben acht Ausgangsleitungen, welche über den Umschalter 32 auf den Zeilenspeicher 33 geschaltet werden können. Der Zeilenspeicher 33 wird durch ein Steuersignal uv8 des Spaltenzählers 17 und uv6 des Halbbildadressenzähler 29 gesteuert. Der Zeilenspeicher 33 ist über vier * acht Leitungen mit einem Zeilenschalter 34 verbunden. Dieser Zeilenschalter 34 wird durch ein Signal uv7 mittels drei * zwei Leitungen des Zeilen- und Koeffizienten-Adressengenerators 19 gesteuert. Der Zeilenschalter 34 ist über zwei * acht Leitungen mit einem für dynamische Informationsinhalte zuständigen vertikalen Filter 35 verbunden. Diesem Filter ist eine Verzögerungsschaltung 36 nachgeschaltet. Das Ausgangssignal der Verzögerungsschaltung 36 sowie ein Ausgangssignal, welches aus statischen Informationsinhalten gewonnen wird und zur Synchronisierung ebenfalls einer Verzögerungsschaltung 40 zugeführt wird, werden einem Umschalter 37 zugeführt, welcher durch ein Umschaltsignal uv5 der Schaltung zur Mittelung von Bewegungsdetektorsignalen 30 entsprechend der Detektion auf Bewegung die transcodierten Chrominanzsignale im Format 1250 Zeilen, 50 Hz, 1:1 einem Bildspeicher 38 und einem Mittelwertbildner 41 zuführt. Die 8-Bit Ausgangsleitungen des Bildspeichers 38 sind mit dem Mittelwertbildner 41 und einem Schalter 43 verbunden, welcher von einem Signal uv11 des Halbbildadressenzähler 29 gesteuert wird. Der Mittelwertbildner 41 ist über 8-Bit Leitungen mit einem Halbbildspeicher 42 und dieser über 8-Bit Leitungen mit einem Umschalter 43 verbunden. Der Halbbildspeicher 42 wird durch Signale uv8 des Spaltenzählers 17 und uv10 des Koeffizienten- und Zeilenadressengenerators 19 gesteuert. Der Halbbildspeicher 42 speichert die geradzahligen Zeilen der bearbeiteten Signale. Die 8-Bit Ausgangsleitungen des Halbbildspeichers 4 sind mit dem Umschalter 43 verbunden.

Fig. 3 zeigt den Aufbau des vertikalen Filters 21. Für die Berechnung eines Bildpunktes eines 1250/100/2:1 Zeilenbildes werden 6 Bildpunkte des 1250/50/2:1 Zeilenbildes benötigt. Diese werden über den Zeilenschalter 20 vom Zeilenspeicher 9 dem vertikalen Filter 21, wie oben beschrieben, zugeführt. Das Signal Y-In wird Verzögerungsschaltungen 44 ... 48 zugeführt. Die Ausgangssignale der Verzögerungsschaltungen 44 ... 48 sowie das Eingangssignal Y-In werden ROM-Tabellen 49 ... 54 zugeführt, welche die für die Filterung erforderlichen Koeffizienten enthalten. Die Ausgangssignale der ROM-Tabellen 49,50 werden in einem Addierer 56 addiert. Dessen Ausgangssignale werden mit dem Ausgangssignal der ROM-Tabelle 51 in einem Addierer 57 addiert. Gleiches wird mit den Ausgangssignalen der ROM-Tabellen 52 ... 54 und Addierern 58 ... 60 durchgeführt. Die Addierer 56 ... 60 sind mit einer Kontrollschaltung 55 verbunden, die nach erfolgter Berechnung die Addierer 56 ... 60 zurücksetzen. Das Ausgangssignal des Addierers 60 wird einem Shift-Register 62 zugeführt, das die der Division entsprechenden niederwertigen Bit der Summe eleminiert und die verbleibenden acht niederwertigsten Bits als Signal FI 1 einem Schalter 61 zuführt, der abhängig von dem gerade bearbeiteten Signalwert eins der Signale FI 1 ... FI 6 der Verzögerungsschaltung 22 zuführt. Der Schalter 61 wird nach Datenübergabe an die Verzögerungsschaltung 22 durch die Kontrollschaltung 55 weitergeschaltet.

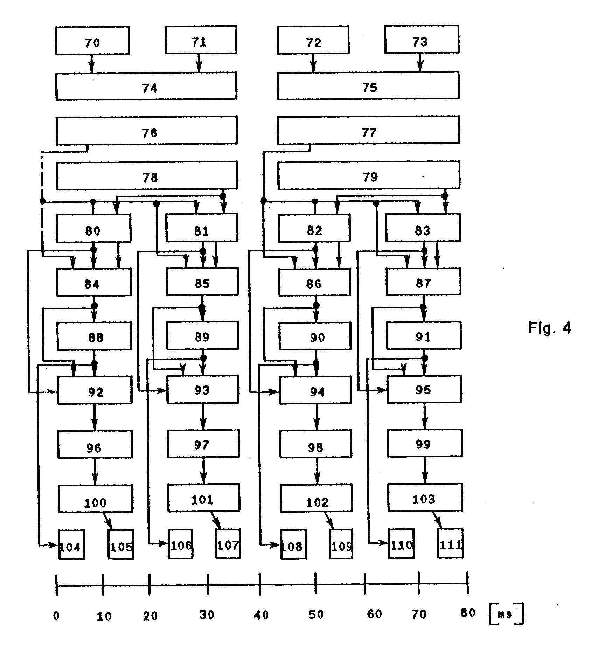

Fig. 4 zeigt den Verarbeitungsablauf aufgetragen über die Zeit. Zwei Halbbilder 70, 71 des 1250/50/2:1 Zeilenbild werden in einem Speicher 74 gespeichert, z. B. Speicher 1, Fig. 1. In den Speichern 76, 78 sind die durch den Speichervorgang gebildeten 1250/50/1:1 Zeilenbilder gespeichert. Sie entsprechen dem Bild n-1, n-2 und sind z.B. in den Speichern 3, 8 Fig. 1 enthalten. Das gerade zu speichernde Bild 74 repräsentiert das Bild n. Aus diesen Bildern 76, 78 werden die Daten zur Bewegungsdetektion 80, 81 sowie zur vertikalen Filterung 84, 85 herangezogen. Nach diesen Stufen liegen bewegungsadaptierte Bildsignale 1250/50/1:1 vor. Zur Erzeugung eines Bildsignals 1250/100/2:1 werden ein entsprechendes Teilbild 104 aus dem Speicher 88 und über Sortierung 92, Mittelwertbildung 96 und Halbbildspeicherung 100 ein Halbbild 105 zeitlich nacheinander erzeugt. Der gleiche Vorgang wird für die Halbbilder 106 ... 111 wiederholt. Zur Vermeidung von Speicherung des detektierten Bewegungssignals werden die Daten im Bewegungsdetektor 81, 83 für die Erzeugung je zweier Halbbilder 106, 107 bzw. 110, 111 erneut verarbeitet.

## Patentansprüche

1. Transcoder zur Bildwiederholfrequenz-Verdoppelung eines Zeilensprung-Bildsignals einer ersten Norm, bei dem zur Bildung eines Zeilensprung-Bildsignals einer zweiten Norm im Fall von statischem Bildinhalt Bildpunkt-Werte von räumlich entsprechenden Halbbildern wiederholt ausgegeben und im Fall von dynamischem Bildinhalt anders ermittelte Bildpunkt-Werte ausgegeben werden, **dadurch gekennzeichnet,** daß der Transcoder so ausgebildet ist, daß bei dynamischem Bildinhalt des Bildsignals der ersten Norm jeweils aus den beiden Eingangshalbbildern und dem zeitlich folgenden Halbbild des Bildsignals der ersten Norm vier aufeinanderfolgende Ausgangshalbbilder des Bildsignals der zweiten Norm wie folgt gebildet werden:
- das erste Ausgangshalbbild enthält die Bildpunkt-Werte des ersten Eingangshalbbildes;
- im zweiten Ausgangshalbbild werden Bildpunkte wiedergegeben, die aus vertikal interpolierten und in einer Zeile liegenden Bildpunkt-Werten des ersten Eingangshalbbildes mit der räumlichen Lage des zweiten Eingangshalbbildes und aus Bildpunkt-Werten in gleicher räumlicher Lage des zweiten Eingangshalbbildes interpoliert werden;
- im dritten Ausgangshalbbild werden Bildpunkt-Werte wiedergegeben, die aus vertikal benachbarten Bildpunkt-Werten des zweiten Eingangshalbbildes interpoliert sind und die gleiche räumliche Lage wie die des ersten Eingangshalbbildes haben;
- im vierten Ausgangshalbbild werden Bildpunkte wiedergegeben, die aus vertikal interpolierten und in einer Zeile liegenden Bildpunkt-Werten des nachfolgenden ersten Eingangshalbbildes mit der räumlichen Lage des zweiten Eingangshalbbildes und aus Bildpunkt-Werten in gleicher räumlicher Lage des zweiten Eingangshalbbildes interpoliert werden.

2. Transcoder nach Anspruch 1, **dadurch gekennzeichnet,** daß das Bildsignal der zweiten Norm ein Zeilensprung-Bildsignal mit 1250 Zeilen und 100Hz Bildwiedergabefrequenz ist.

3. Transcoder nach Anspruch 1 oder 2, **dadurch gekennzeichnet,** daß das Bildsignal (n) der ersten Norm in einem Bildspeicher (1, 3, 8) gespeichert wird, daß die gespeicherten Bildsignale (n-1) eines aktuell zu bearbeitenden Bildes der ersten Norm einem ersten Zeilenspeicher (5) und die gespeicherten Bildsignale (n-2) eines vorangegangenen Bildes der ersten Norm einem zweiten Zeilenspeicher (9) zugeführt werden, daß die Daten der Zeilenspeicher (5, 9) einem Bewegungsdetektor (7) zugeführt werden, daß die Daten des zweiten Zeilenspeichers (9) einem für dynamische Bildinhalte zuständigen vertikalen Filter (21) zugeführt werden und daß in Abhängigkeit vom Ausgangssignal des Bewegungsdetektors (7) bei detektierter Bewegung das vertikal gefilterte Signal oder bei statischer Information das aus dem aktuell bearbeiteten Bildsignal (n-1) der ersten Norm abgeleitete Signal in einem Bildspeicher (24) als Bildsignal ohne Zeilensprung gespeichert werden.

4. Transcoder nach Anspruch 3, **dadurch gekennzeichnet,** daß Bildpunkte gleicher räumlicher Lage des zu speichernden Bildsignales und des gespeicherten Bildsignales einem Sortierer (25) zugeführt werden, daß das Sortierergebnis einem Medianfilter (26) zugeführt wird und daß das Ausgangssignal des Medianfilters (26) das erste Halbbild des Bildsignals der zweiten Norm darstellt.

5. Transcoder nach einem oder mehreren der Ansprüche 1 bis 4, **dadurch gekennzeichnet,** daß die Chrominanzbildpunkte (U, V) für das zweite und für das vierte Ausgangshalbbild aus jeweils einem Bildpunkt des zweiten Eingangshalbbildes und einem vertikal interpolierten Bildpunkt gleicher räumlicher Lage des ersten Eingangshalbbildes bzw. des darauffolgenden ersten Eingangshalbbildes ermittelt sind.

6. Transcoder nach Anspruch 5, **dadurch gekennzeichnet,** daß die gewichteten Werte der Bildpunkte aufaddiert und durch die Summe der Gewichtungsfaktoren dividiert werden und diese Summe eine Potenz von 2 ist.

7. Transcoder nach Anspruch 6, **dadurch gekennzeichnet,** daß als Ergebnis diejenigen Bits verwendet werden, welche nach der Division die acht niederwertigen Bits darstellen.

8. Transcoder nach einem oder mehreren der Ansprüche 5 bis 7, **dadurch gekennzeichnet,** daß ein Bewegungsdetektorsignal, das bei der Transcodierung der Luminanzinformation gewonnen wird, für die Transcodierung der Chrominanzinformation herangezogen wird.

## Claims

1. Transcoder for doubling the picture regeneration frequency of a line-interlacing picture signal of a first standard, in which, for the formation of a line-interlacing picture signal of a second standard, in the case of static picture content pixel values of spatially corresponding fields are repeatedly outputted, and in the case of dynamic picture content pixel values determined otherwise are outputted, **characterised in that** the transcoder is so constructed that with dynamic picture content of the picture signal of the first standard there are formed respectively from the two input fields and from the ensuing field in time of the picture signal of the first standard four consecutive output fields of the picture signal of the second standard as follows:
- the first output field contains the pixel values of the first input field;
- in the second output field there are reproduced pixels which are interpolated from vertically interpolated pixel values lying in a line of the first input field with the spatial position of the second input field and from pixel values in the same spatial position of the second input field;
- in the third output field there are reproduced pixel values which are interpolated from vertically adjacent pixel values of the second input field and have the same spatial position as that of the first input field;
- in the fourth output field there are reproduced pixels which are interpolated from vertically interpolated pixel values lying in a line of the ensuing first input field with the spatial position of the second input field and from pixel values in the same spatial position of the second input field.

2. Transcoder according to claim 1, **characterised in that** the picture signal of the second standard is a line-interlacing picture signal with 1250 lines and 100 Hz picture reproduction frequency.

3. Transcoder according to claim 1 or 2, **characterised in that** the picture signal (n) of the first standard is stored in a picture store (1, 3, 8), that the stored picture signals (n-1) of a picture currently to be processed of the first standard are fed to a first line store (5) and the stored picture signals (n-2) of a preceding picture of the first standard to a second line store (9), that the data of the line stores (5, 9) are fed to a movement detector (7), that the data of the second line store (9) are fed to a vertical filter (21) responsible for dynamic picture content and that as a function of the output signal of the movement detector (7), in the case of detected movement the vertically filtered signal or in the case of static information the signal derived from the currently processed picture signal (n-1) of the first standard are stored in a picture store (24) as a picture signal without line interlacing.

4. Transcoder according to claim 3, **characterised in that** pixels of identical spatial position of the picture signal to be stored and of the stored picture signal are fed to a sorter (25), that the sorting result is fed to a median filter (26) and that the output signal of the median filter (26) represents the first field of the picture signal of the second standard.

5. Transcoder according to one or more of claims 1 to 4, **characterised in that** the chrominance pixels (U, V) for the second and for the fourth output field are determined from respectively a pixel of the second input field and a vertically interpolated pixel with the same spatial position of the first input field or of the following first input field.

6. Transcoder according to claim 5, **characterised in that** the weighted values of the pixels are added and divided by the sum of the weighting factors and said sum is a power of 2.

7. Transcoder according to claim 6, **characterised in that** there are used as the result those bits which represent after the division the eight low-order bits.

8. Transcoder according to one or more of claims 5 to 7, **characterised in that** a movement detector signal which is obtained during the transcoding of the luminance information is used for the transcoding of the chrominance information.

## Revendications

1. Transcodeur pour doubler la fréquence de répétition d'image d'un signal d'image à entrelacement d'une première norme pour lequel, pour former un signal d'image à entrelacement d'une seconde norme, dans le cas d'un contenu d'image statique, des valeurs de points d'image de trames en correspondance spatiale sont extraites de manière répétée et, dans le cas d'un contenu d'image dynamique, des valeurs de points d'image déterminées autrement sont extraites, **caractérisé en ce** que le transcodeur est configuré de manière telle que, pour un contenu d'image dynamique du signal d'image de la première norme, quatre trames de sortie successives du signal d'image de la seconde norme sont formées respectivement à partir des deux trames d'entrée et de la trame suivant dans le temps du signal d'image de la première norme, comme suit :
- la première trame de sortie contient les valeurs de points d'image de la première trame d'entrée ;
- dans la seconde trame de sortie il est reproduit des points d'image qui sont interpolés à partir de valeurs de points d'image interpolées verticalement et se trouvant dans une ligne de la première trame d'entrée avec la position spatiale de la seconde trame d'entrée et à partir de valeurs de points d'image de la même position spatiale de la seconde trame d'entrée ;
- dans la troisième trame de sortie, il est reproduit des valeurs de points d'image qui sont interpolées à partir de valeurs de point d'image voisines verticalement de la seconde trame d'entrée et qui ont la même position spatiale que ceux de la première trame d'entrée ;
- dans la quatrième trame de sortie, il est reproduit des points d'image qui sont interpolés à partir de valeurs de points d'image interpolées verticalement et se trouvant dans une ligne de la première trame d'entrée suivante avec la position spatiale de la seconde trame d'entrée et à partir de valeurs de points d'image de la même position spatiale de la seconde trame d'entrée.

2. Transcodeur selon la revendication 1, **caractérisé en ce** que le signal d'image de la seconde norme est un signal d'image à entrelacement avec 1250 lignes et une fréquence de reproduction d'image de 100 Hz.

3. Transcodeur selon la revendication 1 ou 2, **caractérisé en ce** que le signal d'image (n) de la première norme est mémorisé dans une mémoire d'image (1, 3, 8), que les signaux d'image mémorisés (n-1) d'une image de la première norme qui doit être traitée actuellement sont amenés à une première mémoire de lignes (5) et que les signaux d'image mémorisés (n-2) d'une image précédente de la première norme sont amenés à une seconde mémoire de lignes (9), que les données des mémoires de lignes (5, 9) sont amenées à un détecteur de mouvement (7), que les données de la seconde mémoire de lignes (9) sont amenées à un filtre vertical (21) compétent pour les contenus d'image dynamique et qu'en fonction du signal de sortie du détecteur de mouvement (7), lors de la détection de mouvement, le signal filtré verticalement ou, lors d'information statique, le signal dérivé du signal d'image traité actuellement (n-1) de la première norme est mis en mémoire dans une mémoire d'images (24) comme signal d'image sans entrelacement.

4. Transcodeur selon la revendication 3, **caractérisé en ce** que des points d'image de même position spatiale du signal d'image à mémoriser et du signal d'image mémorisé sont amenés à un dispositif de tri (25), que le résultat du tri est amené à un filtre médian (26) et que le signal de sortie du filtre médian (26) représente la première trame du signal d'image de la seconde norme.

5. Transcodeur selon l'une ou plusieurs des revendications 1 à 4, **caractérisé en ce** que les points d'image de chrominance (U, V) pour la seconde et pour la quatrième trame de sortie sont déterminés à partir respectivement d'un point d'image de la seconde trame d'entrée et d'un point d'image interpolé verticalement de même position spatiale de la première trame d'entrée ou de la première trame d'entrée qui suit.

6. Transcodeur selon la revendication 5, **caractérisé en ce** que les valeurs pondérées des points d'image sont ajoutées et divisées par la somme des facteurs de pondération et que cette somme est une puissance de 2.

7. Transcodeur selon la revendication 6, **caractérisé en ce** que l'on utilise comme résultat les bits qui représentent, après la division, les huit bits d'ordre inférieur.

8. Transcodeur selon l'une ou plusieurs des revendications 5 à 7, **caractérisé en ce** qu'un signal du détecteur de mouvement, qui est obtenu lors du transcodage de l'information de luminance, sert au transcodage de l'information de chrominance.
